# FASCICULE DE BREVET EUROPEEN

(11) **EP 2 864 649 B1**
(45) Date de publication et mention de la délivrance du brevet: **11.04.2018**
(21) Numéro de dépôt: 13730537.1
(22) Date de dépôt: 19.06.2013
(51) Int. Cl.: F16C 1/26, F16C 1/10

(54) **DISPOSITIF DE COMMANDE PAR CÂBLE**
SEILZUGSTEUERUNG
CABLE CONTROL DEVICE

(30) Priorité: 21.06.2012 FR 1255861
(43) Date de publication de la demande: 29.04.2015
(73) Titulaire: Valeo Systemes Thermiques, 78320 Le Mesnil Saint Denis (FR)
(72) Inventeur: QUEINNEC, Jean-Yves, 78990 Elancourt (FR)
(74) Mandataire: Metz, Gaëlle
(86) Numéro de dépôt international: PCT/EP2013/062688
(87) Numéro de publication internationale: WO 2013/189961

(56) Documents cités:
- FR-A1- 2 956 885
- US-A- 3 435 107
- US-A- 3 439 555
- US-A- 5 243 876
- US-A1- 2006 053 944
- US-A1- 2009 260 474

## Description

La présente invention concerne le domaine technique des dispositifs de commande par câble, également appelés dispositifs de commande de type "Bowden".

Un tel dispositif de commande par câble comprend un câble de commande mobile en translation à l'intérieur d'une gaine de protection. Le câble de commande assure alors la transmission du mouvement d'un organe de manoeuvre menant à un organe de manoeuvre mené au travers de la gaine de protection. Les extrémités du câble de commande sont respectivement fixées à l'organe de manoeuvre mené et à l'organe de manoeuvre menant.

De tels systèmes de commande à câble trouvent de nombreuses applications dans le domaine automobile, notamment, pour assurer la transmission des mouvements d'un levier de vitesse à une boîte de vitesses, pour commander des mécanismes d'ouverture de porte ou de trappe de véhicule ou encore pour commander le mouvement de volets dans des unités de ventilation et/ou de climatisation de véhicule, sans que cette liste ne soit ni exhaustive ni limitative.

Le document US 3 439 555 A décrit un dispositif de commande par câble comportant des brides de fixation. Afin que la transmission assurée par le câble de commande soit aussi précise que possible, il est nécessaire d'ajuster au mieux la longueur du parcours du câble de commande de manière à réduire, au maximum, les jeux ou les courses 'mortes' du câble de commande en fonction des efforts à transmettre et des efforts susceptibles d'être appliqués par l'organe de manoeuvre menant.

Une manière de procéder à un tel réglage consiste à ajuster la distance entre, d'une part, une extrémité fixe de la gaine de protection, et, d'autre part, l'organe de manoeuvre mené ou l'organe de manoeuvre menant.

À cet effet, il a été proposé des systèmes de fixation d'une extrémité de la gaine de protection mettant en oeuvre des moyens de réglage de la position de la gaine de protection au moyen de systèmes à vis ou encore de système à ressort à réglage automatique ou semi-automatique.

De tels systèmes de réglage permettent effectivement d'assurer l'ajustement recherché de la course du câble de commande mais présentent l'inconvénient d'être relativement onéreux à fabriquer en raison de la complexité des pièces mises en oeuvre.

Il est donc apparu le besoin d'un nouveau système de commande par câble permettant un ajustement aussi précis que possible de la course du câble de commande tout en mettant en oeuvre des moyens simples de fabrication et qui soit peu onéreux.

Afin d'atteindre un tel objectif, la présente invention concerne un dispositif de commande par câble comprenant au moins une gaine de protection, optionnellement au moins un câble de commande mobile en translation à l'intérieur de la gaine de protection, et au moins une bride de fixation de la gaine de protection sur un support.

Selon la présente invention, la gaine de protection comprend au moins une aile latérale de fixation s'étendant radialement à l'extérieur de la gaine de protection, et avantageusement, plastiquement déformable. De plus, la bride de fixation comprend une mâchoire comprenant un premier mors et un deuxième mors, aptes à pincer l'aile latérale de fixation dans une position de fermeture de la mâchoire.

A cet effet, le premier mors comprend au moins une surface de pincement apte à coopérer avec au moins une surface de pincement du deuxième mors, afin d'enserrer l'aile latérale de fixation dans une position de fermeture de la mâchoire.

De façon complémentaire, la surface de pincement du premier mors et/ou respectivement la surface de pincement du deuxième mors comprend au moins un plot de blocage. De plus, la surface de pincement du premier mors et/ou la surface de pincement du deuxième mors est susceptible de comprendre au moins une cavité de blocage.

Dans un tel agencement, en position de fermeture de la mâchoire, le plot de blocage de la surface de pincement du premier mors, respectivement du deuxième mors, coopère avec la cavité de blocage de la surface de pincement du deuxième mors, respectivement du premier mors, afin de déformer l'aile latérale de fixation.

La mise en oeuvre d'une telle aile latérale de fixation solidaire de la gaine de protection et pincée par le premier mors et le deuxième mors de la mâchoire de la bride de fixation permet de réaliser simplement la fonction de fixation de l'extrémité de la gaine de protection. De plus, le simple pincement de l'aile latérale de fixation entre le premier mors et le deuxième mors autorise un réglage facile de la position de l'extrémité correspondante de la gaine de protection par simple ouverture et fermeture de la mâchoire de la bride de fixation.

De plus, un tel agencement permet de faire obstacle à tout glissement de l'aile latérale de fixation entre le premier mors et le deuxième mors lorsque la mâchoire est fermée. En effet, la déformation plastique de l'aile latérale de fixation assure un blocage positif de la translation longitudinale dans les deux sens et donc une immobilisation positive de la gaine de protection liée à l'aile latérale de fixation également dans les deux sens de translation longitudinale.

Selon une forme de réalisation de l'invention, la mâchoire est adaptée pour, en position de fermeture, entourer au moins une gaine de protection. L'emprisonnement de la gaine de protection par la mâchoire permet d'assurer une parfaite immobilisation de la gaine de protection.

Selon une autre caractéristique, le premier mors, respectivement le deuxième mors, comprend au moins une empreinte de réception, apte à recevoir la gaine de protection.

Selon une autre variante de réalisation, lorsque le dispositif de commande comprend deux gaines de protection, le premier mors, respectivement le deuxième mors, comprend deux empreintes de réception d'une gaine de protection respective. Préférentiellement, dans une telle configuration, les deux empreintes de réception sont séparées par une surface de pincement de l'aile latérale de fixation.

Selon d'autres caractéristiques de la présente invention, le premier mors et le deuxième mors sont liés par une articulation. De plus, la bride de fixation peut comprendre des moyens de verrouillage, permettant d'assembler le premier mors et le deuxième mors en position de fermeture de la mâchoire.

La mise en oeuvre d'une telle articulation permet de faciliter les mouvements d'ouverture et de fermeture de la mâchoire et évite une perte de pièces constitutives de la mâchoire, notamment le premier mors et/ou le deuxième mors.

Selon une autre caractéristique de l'invention, la bride de fixation comprend des moyens de verrouillage du premier mors et du deuxième mors en position de fermeture de la mâchoire.

Selon une variante de réalisation, la bride de fixation est liée de manière rigide à une platine d'adaptation sur le support. La mise en oeuvre d'une telle platine d'adaptation sur le support permet de faciliter l'intégration du dispositif de commande selon la présente invention sur le système dont il assure la commande.

Préférentiellement, la bride de fixation et la platine d'adaptation correspondante forment un ensemble monobloc. Cette variante de réalisation est particulièrement adaptée à une fabrication de la bride de fixation et de la platine d'adaptation par injection de matière plastique.

Un mode particulier de la présente invention est tel que le dispositif de commande par câble comprend deux gaines de protection, préférentiellement à l'intérieur desquelles est disposé un câble de commande mobile en translation par rapport à la gaine de protection respective, liées entre elles au niveau d'une au moins une de leur extrémités par l'aile latérale de fixation s'étendant radialement entre les deux gaines de protection.

Alternativement, le dispositif de commande par câble comprend deux gaines de protection comportant respectivement une aile latérale de fixation.

Un tel dispositif de commande selon l'invention est particulièrement adapté pour la commande d'un système dans lequel les câbles de commande travaille en traction pour déplacer dans deux sens opposés un organe de manoeuvre mené.

Selon une autre alternative de réalisation, la gaine de protection comprend des ailes latérales de fixation respectivement agencées à chacune des extrémités de la gaine de protection.

Par ailleurs, avantageusement, le dispositif de commande par câble selon la présente invention comprend deux brides de fixation respectivement agencées à chacune des extrémités de la gaine de protection.

Enfin, selon des caractéristiques complémentaires, la platine d'adaptation porte au moins un organe de manoeuvre mobile en rotation et auquel est fixé au moins un câble de commande mobile en translation par rapport à la gaine de protection.

De plus, la platine d'adaptation est susceptible de comprendre des moyens de guidage d'au moins un câble de commande, avantageusement situés entre la bride de fixation et l'organe de manoeuvre.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- La figure 1 est une vue en perspective d'un dispositif de commande par câble selon la présente invention.
- La figure 2 est une vue en perspective d'une extrémité du dispositif de commande par câble de la figure 1.
- La figure 3 est une vue en perspective d'une extrémité du dispositif de commande par câble selon la figure 2, présentant une bride de fixation en position ouverte, et
- La figure 4 est une vue en perspective d'une extrémité du dispositif de commande par câble selon la figure 2, présentant une vue détaillée de la bride de fixation en position ouverte.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

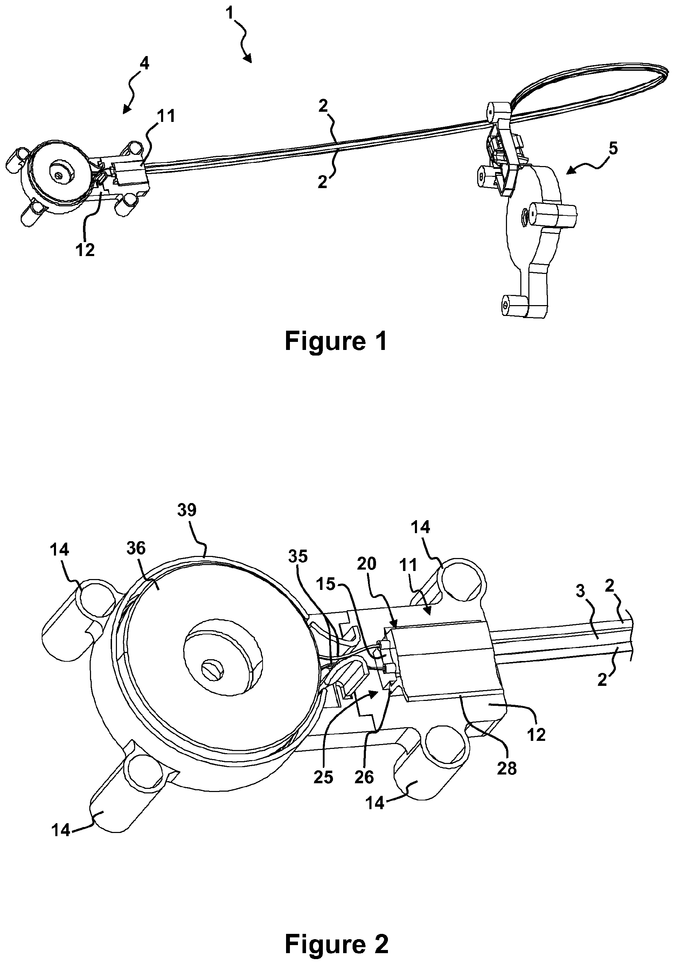

La figure 1 est une vue en perspective d'un dispositif de commande par câble 1 selon la présente invention. Le dispositif de commande par câble 1 comprend au moins une gaine de protection 2, avantageusement flexible.

Selon l'exemple illustré sur la figure 1, le dispositif de commande par câble 1 comprend deux gaines de protection 2.

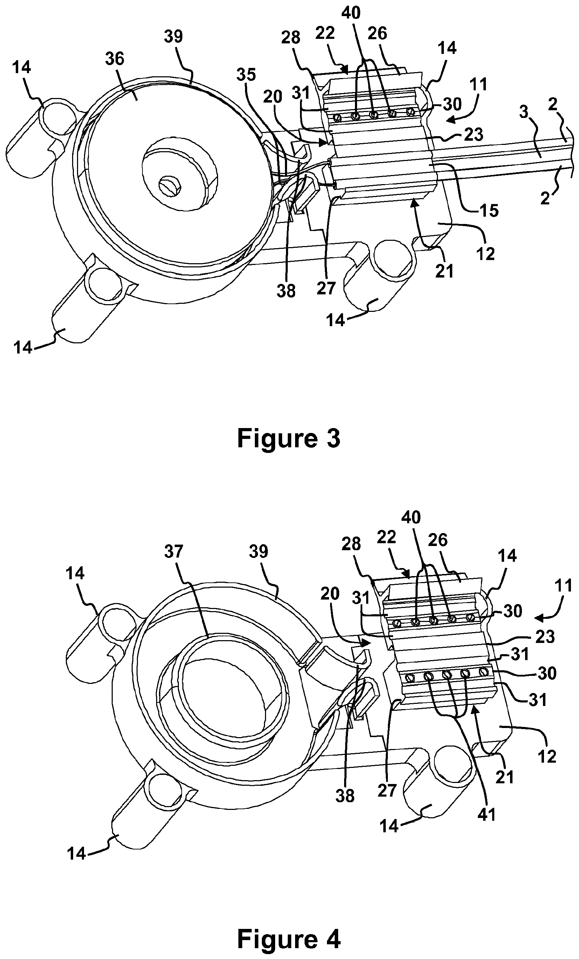

Selon un exemple particulier de réalisation, les deux gaines de protection 2 sont solidarisées, au moins ponctuellement et avantageusement sur toute la longueur, par une entretoise souple 3, mieux visible sur les figures 2 et 3. Une telle entretoise souple 3 permet de faciliter la manipulation du dispositif de commande selon l'invention et est bien entendu facultative.

La gaine de protection 2 s'étend entre une première extrémité 4 et une seconde extrémité 5 du dispositif de commande par câble 1, constituant respectivement des moyens de commande. De tels moyens de commande permettent l'intégration du dispositif de commande, selon la présente invention, dans un ensemble plus complexe de manière à y assurer la transmission d'un mouvement entre deux organes mobiles distants l'un de l'autre.

Selon l'exemple illustré, la première extrémité 4 et une seconde extrémité 5 du dispositif de commande par câble 1 sont sensiblement identiques et associées à des composants mécaniques sensiblement similaires. Aussi, seule la première extrémité 4 du dispositif de commande par câble 1 sera décrite par la suite, étant entendu qu'une description identique s'applique à la deuxième extrémité 5 du dispositif de commande par câble 1 en ce qui concerne les éléments constitutifs.

La première extrémité 4 est apte à être fixée sur un support, non représenté, par exemple un boîtier d'une unité de ventilation et/ou de climatisation de véhicule ou un tableau de commande d'une telle unité de ventilation et/ou de climatisation, du système dans lequel le dispositif de commande par câble 1 est intégré.

La première extrémité 4 du dispositif de commande par câble 1 comprend au moins une bride de fixation 11, apte à constituer un moyen de fixation de la gaine de protection 2 sur la première extrémité 4 du dispositif de commande par câble 1.

À cet effet, la bride de fixation 11 est liée de manière rigide à une platine d'adaptation 12. Par ailleurs, la platine d'adaptation 12 contribue à la fixation de la première extrémité 4 sur le support du système dans lequel le dispositif de commande par câble 1 est intégré.

Selon l'exemple de réalisation illustré, la bride de fixation 11 et la platine d'adaptation 12 forme un ensemble monobloc, notamment obtenu de moulage par injection de matière plastique.

Alternativement, la bride de fixation 11 pourrait être rapportée sur la platine d'adaptation 12 et fixée sur celle-ci par tous moyens appropriés. De tels moyens appropriés sont, par exemple, un dispositif de crochets élastiques immobilisant la bride de fixation 11, par exemple dans un logement de réception aménagé dans la platine d'adaptation 12, ou un système de vis solidarisant la bride de fixation 11 sur la platine d'adaptation 12.

Par ailleurs, la platine d'adaptation 12 comprend en outre des moyens d'attache 14, permettant d'assurer le maintien de la première extrémité 4 sur le support du système dans lequel le dispositif de commande par câble 1 est intégré. Tel que présenté sur les figures, les moyens d'attache 14 sont, par exemple, formés par des alésages, aptes à permettre la mise en place de vis de fixation, non représentées.

On se reporte dorénavant à la figure 2 qui est une vue en perspective de la première extrémité 4 du dispositif de commande par câble 1 de la figure 1.

Selon un mode particulier de réalisation, le dispositif de commande par câble 1 comprend au moins une aile latérale de fixation 15. Une telle aile latérale de fixation 15 s'étend radialement à l'extérieur de la gaine de protection 2. Selon l'exemple illustré, particulièrement sur la figure 3, l'aile latérale de fixation 15 relie entre elles deux gaines de protection 2, préférentiellement à partir de leurs extrémités et sur une longueur limitées, en particulier correspondant à quelques centimètres. L'aile latérale de fixation 15 est, par exemple, surmoulée à l'extrémité correspondante des deux gaines de protection 2. Alternativement, chaque gaine de protection 2 comporte respectivement une aile latérale de fixation 15.

Afin d'assurer la fixation de la gaine de protection 2 à la première extrémité 4 du dispositif de commande par câble 1, la bride de fixation 11 comprend une mâchoire 20. La mâchoire 20 est formée d'un premier mors 21 et d'un deuxième mors 22. Le premier mors 21 et le deuxième mors 22 sont mobiles entre une position de fermeture de la mâchoire 20, telle qu'illustrée à la figure 2, et une position d'ouverture de la mâchoire 20, telle qu'illustrée aux figures 3 et 4.

Dans la position de fermeture de la mâchoire 20, le premier mors 21 et le deuxième mors 22 coopèrent afin d'assurer un maintien des éléments agencés entre eux. Dans la position d'ouverture de la mâchoire 20, le premier mors 21 et le deuxième mors 22 sont dissociés afin de libérer les éléments agencés entre eux.

La mâchoire 20 permet d'assurer un pincement de l'aile latérale de fixation 15 entre le premier mors 21 et le deuxième mors 22.

Plus précisément, les figures 3 et 4 sont des vues en perspective de la première extrémité 4 du dispositif de commande par câble 1 selon la figure 2, présentant la bride de fixation 11, respectivement, en position ouverte, et en vue détaillée dans laquelle les deux gaines de protection 2 ont été retirées.

Selon l'exemple illustré, le premier mors 21 est lié de manière rigide à la platine 12 tandis que le deuxième mors 22 est lié au premier mors 21 par une articulation 23.

En particulier, l'articulation 23 est une charnière formée par un film de matière plastique obtenue lors de la fabrication par moulage du premier mors 21 et du deuxième mors 22.

La mise en oeuvre d'une telle articulation 23 évite une perte du deuxième mors 22 lorsque la mâchoire 20 est en position ouverte.

La bride de fixation 11 comprend également des moyens de verrouillage 25 permettant d'assembler le premier mors 21 et le deuxième mors 22 en position de fermeture.

Selon l'exemple de réalisation illustré, les moyens de verrouillage 25 sont formés par un crochet 26 et un épaulement 27. Le crochet 26 est solidaire du deuxième mors 22. Préférentiellement, le crochet 26 est situé à l'opposé de l'articulation 23. Par ailleurs, l'épaulement 27 est solidaire du premier mors 21. Le crochet 26 est destiné à venir s'engager avec l'épaulement 27.

L'engagement du crochet 26 avec l'épaulement 27 s'effectue par déformation élastique du crochet 26. La déformation élastique du crochet 26 est obtenue par l'élasticité propre du matériau constitutif du premier mors 21 et du deuxième mors 22. En complément et/ou en alternative, la déformation élastique du crochet 26 est obtenue par la géométrie du crochet 26.

Afin de permettre l'ouverture de la mâchoire 20, le deuxième mors 22 comprend un organe de préhension 28 située le long du crochet 26 à l'opposé de l'articulation 23.

Selon divers modes de réalisation alternatifs, le premier mors 21 et le deuxième mors 22 sont reliés l'un à l'autre par un autre type d'organe de liaison. Par exemple, un tel autre type d'organe de liaison peut être un lien, tel qu'un fil plastique.

Alternativement, les moyens de verrouillage 25 peuvent être formés par deux crochets 26, disposés de part et d'autre de la bride de fixation 11, et coopérant avec un épaulement 27 respectif.

Par ailleurs, le premier mors 21 et le deuxième mors 22 peuvent être deux pièces distincts et séparées.

Enfin, les moyens de verrouillage 25 permettant d'assembler le premier mors 21 et le deuxième mors 22 en position de fermeture peuvent être constitués par des clips ou des moyens d'assemblage, tels que des vis.

Par ailleurs, afin de permettre un assemblage cohérent, il est possible d'agencer un organe de centrage entre le premier mors 21 et le deuxième mors 22.

Le premier mors 21 et le deuxième mors 22 comprennent respectivement des faces de travail destinées à venir en contact avec la gaine de protection 2.

Selon la présente invention, les faces de travail du premier mors 21 et du deuxième mors 22 sont destinées à coopérer en position de fermeture de la mâchoire. Une telle coopération des faces de travail du premier mors 21 et du deuxième mors 22 constitue au moins deux surfaces de pincement 30 venant enserrer la gaine de protection 2.

Préférentiellement, selon la présente invention, les faces de travail du premier mors 21 et du deuxième mors 22 constitue deux surfaces de pincement 30 venant enserrer l'aile latérale de fixation 15. Alternativement, les faces de travail du premier mors 21 et du deuxième mors 22 constitue deux surfaces de pincement 30 venant enserrer l'aile latérale de fixation 15 respectives de chaque gaine de protection 2.

Les surfaces de pincement 30 sont placées de manière à être chacune en contact avec une face de l'aile latérale de fixation 15 lorsque le premier mors 21 et le deuxième mors 22 sont en position de fermeture de la mâchoire.

Plus spécifiquement, la surface de pincement 30 du premier mors 21, respectivement la surface de pincement 30 du deuxième mors 22, est adjacente à au moins une empreinte de réception 31. L'empreinte de réception 31 est apte à recevoir la gaine de protection 2.

Selon la présente invention, le nombre d'empreintes de réception 31 adjacentes à la surface de pincement 30 du premier mors 21, respectivement la surface de pincement 30 du deuxième mors 22, est égale au nombre de gaines de protection 2 du dispositif de commande par câble 1.

Ainsi, tel que présenté sur les figures 3 et 4, le premier mors 21, respectivement le deuxième mors 22, comprend deux empreintes de réception 31 disposés de part et d'autre de la surface de pincement 30 du premier mors 21, respectivement de la surface de pincement 30 du deuxième mors 22.

Les empreintes de réception 31 sont aménagées dans les faces de travail du premier mors 21 et du deuxième mors 22. Avantageusement, les empreintes de réception 31 présentent une forme complémentaire de la forme extérieure des gaines de protection 2 de façon à en épouser la forme des gaines de protection 2 lorsque la mâchoire 20 est fermée.

Préférentiellement, les empreintes de réception 31 présentent une forme hémicylindrique et s'étendent parallèlement l'une à l'autre de part et d'autre de la surface de pincement 30 correspondante, si les gaines de protection 2 destinées à être logée dans les empreintes de réception 31 sont de sections circulaires.

Le dispositif de commande 1 comprend au moins un câble de commande 35. Préférentiellement, le câble de commande 35 est disposé à l'intérieur de la gaine de protection 2 de manière à pouvoir s'y déplacer en translation, avantageusement sans jeu.

Selon un exemple de réalisation, chaque gaine de protection 2 comprend un unique câble de commande 35 coulissant à l'intérieur de celle-ci. Alternativement, chaque gaine de protection 2 comprend plusieurs câbles de commande 35 coulissant à l'intérieur de celle-ci.

Le câble de commande 35 est destiné à être accroché au niveau d'une extrémité à un organe de manoeuvre 36. L'organe de manoeuvre 36 est adapté pour être mobile en rotation en étant guidé par des moyens de guidage formés un palier 37 agencé sur la platine d'adaptation 12.

L'organe de manoeuvre 36 comprend en outre des moyens d'accouplement, non visibles, avec un organe à commander, notamment un axe d'un volet.

L'accrochage de l'extrémité du câble de commande 35 avec l'organe de manoeuvre 36 peut être effectué de toute manière appropriée, par exemple par l'intermédiaire d'une boule d'accrochage sertie ou surmoulée sur le câble de commande 35.

Le dispositif de commande par câble 1 ainsi constitué est fabriqué et assemblé de la manière suivante.

La platine d'adaptation 12 et la bride de fixation 11 sont fabriquées par injection de matière plastique. Préférentiellement, la platine d'adaptation 12 et la bride de fixation 11 sont moulées simultanément et forme une pièce unitaire. Alternativement, la platine d'adaptation 12 et la bride de fixation 11 sont moulées séparément et sont ultérieurement assemblées entre elles. Il est également procédé à la fabrication des organes de manoeuvre 36 destinés à équiper respectivement la première extrémité 4 et la seconde extrémité 5.

Par ailleurs, la gaine de protection 2 est découpée à la longueur nécessaire. Par ailleurs, selon un mode particulier de réalisation, lorsque le dispositif de commande par câble 1 comprend deux gaines de protection 2, les gaines de protection 2 peuvent faire l'objet d'un surmoulage optionnel, au moins localisé, de manière à former l'entretoise 3.

Par ailleurs, les gaines de protection 2 font l'objet d'un surmoulage au niveau de leurs extrémités afin de définir les ailes latérales de fixation 15.

Ensuite, les câbles de commande 35 sont placés à l'intérieur des gaines de protection 2 et coupés à la longueur nécessaire. Des moyens d'accrochage, par exemples des boules, sont surmoulés ou fixés au niveau des extrémités libres des câbles de commande 35.

Pour l'assemblage final du dispositif de commande par câble 1 selon l'invention, les deux platines d'adaptation 12 sont disposées sur un banc de montage, non représenté, de manière à être séparée d'une distance égale à celle du dispositif de commande par câble 1 intégré dans le système auquel il est destiné. Ensuite, les extrémités des câbles de commande 35 sont accrochées sur les organes de manoeuvre 36 placés sur leurs paliers respectifs 37.

Il est à noter que, selon l'exemple illustré, chaque platine d'adaptation 12 comprend des moyens de guidage 38 des câbles de commande 35. Les moyens de guidage 38 sont placés entre la bride de fixation 11 et l'organe de manoeuvre 36 de manière à éviter un décrochage intempestif des câbles de commande 35. Les moyens de guidage 38 sont, par exemple, formés par des surfaces convexes contre lesquels les câbles de commande 35 viennent glisser.

La platine d'adaptation 12 comprend en outre une paroi périphérique 39 entourant l'organe de manoeuvre 36 pour le protéger et éviter le décrochage des câbles de commande 35, tout en laissant passer les câbles de commande 35 entre les moyens de guidage 38.

Une fois les organes de manoeuvre 36 avec les extrémités des câbles de commande 35 accrochées mis en place sur la platine d'adaptation 12, les extrémités des gaines de protection 2 sont placées sur le premier mors 21 de sorte que les gaines de protection 2 soient positionnées dans les empreintes de réception 31 correspondantes et l'aile latérale de fixation 15 placée contre la surface de pincement 30 correspondante.

Par suite, le deuxième mors 22 est alors placé en position de fermeture de sorte à emprisonner les gaines de protection 2 et à pincer l'aile latérale de fixation 15 ou les ailes latérales de fixation 15.

Ainsi, les gaines de protection 2 se trouvent immobilisées en translation par rapport à la bride de fixation 11 sous l'effet du pincement assuré par la mâchoire 20.

De façon complémentaire, afin de renforcer l'immobilisation en translation longitudinale, la surface de pincement 30 du premier mors 21, respectivement du deuxième mors 22, comprend au moins un plot de blocage 40. Selon l'exemple illustré, la surface de pincement 30 comporte cinq plots de blocage 40. Le plot de blocage 40 est une forme concave s'étendant en saillie de la surface de pincement 30.

Par ailleurs, préférentiellement, la surface de pincement 30 du premier mors 21, respectivement du deuxième mors 22, comprend au moins une cavité de blocage 41. Selon l'exemple illustré, la surface de pincement 30 comporte cinq cavités de blocage 41. La cavité de blocage 41 est une forme convexe s'étendant dans la surface de pincement 30.

Préférentiellement, en position de fermeture de la mâchoire 20, le plot de blocage 40 du premier mors 21 coopère avec la cavité de blocage 41 du deuxième mors 22.

Avantageusement, chaque plot de blocage 40 du premier mors 21 est destiné à coopérer avec une cavité de blocage 41 respective du deuxième mors 22 pour assurer une déformation plastique de l'aile latérale de fixation 15, respectivement des ailes latérales de fixation 15, de manière à assurer une immobilisation complémentaire.

Réciproquement, en position de fermeture de la mâchoire 20, chaque cavité de blocage 41 du premier mors 21 est destinée à coopérer avec un plot de blocage 40 respectif du deuxième mors 22 pour assurer une déformation plastique de l'aile latérale de fixation 15, respectivement des ailes latérales de fixation 15, de manière à assurer une immobilisation complémentaire.

Le matériau constitutif et/ou les dimensions de l'aile latérale de fixation 15, respectivement des ailes latérales de fixation 15, sont alors adaptés pour la rendre déformable plastiquement sous l'effet conjugué du/des plot(s) de blocage 40 et de la/des cavité(s) de blocage 41.

Compte tenu du caractère déformable de l'aile latérale de fixation 15, respectivement des ailes latérales de fixation 15, les gaines de protection 2 peuvent être immobilisées en toute position de l'aile de fixation 15, respectivement des ailes latérales de fixation 15, dans la mâchoire 20. Une telle possibilité d'immobilisation en toute position ne serait pas possible si l'aile latérale de fixation 15 était pourvue de conformations pré-moulées destinées à coopérer avec le(s) plot(s) de blocage 40 et la/des cavité(s) de blocage 41 des surfaces de pincement 30.

Une fois assemblé, le dispositif de commande par câble 1 peut être intégré à un système dans lequel il assurera la transmission de mouvement entre les deux organes de manoeuvre 36 accouplés à un système menant et à un système mené. Lors d'une telle intégration, l'organe de préhension 28 peut être utilisée pour ouvrir la mâchoire 20 de manière à ajuster le réglage du dispositif de commande par câble 1 et notamment le jeu de câbles de commande 35.

Selon l'exemple décrit précédemment, le dispositif de commande par câble 1 selon l'invention comprend deux gaines de protection 2, respectivement associées à un câble de commande 35. Toutefois, un dispositif de commande par câble 1 selon l'invention peut comprendre qu'une seule gaine de protection 2 et associée à un seul câble de commande 35.

De même, selon l'exemple décrit précédemment, la bride de fixation 11 est solidaire d'une platine d'adaptation 12. Toutefois, le dispositif de commande par câble 1 selon l'invention ne comprend pas nécessairement de platine d'adaptation 12 et peut ne comprendre que les brides de fixation 11 pourvues de moyens de fixation 14 sur un support, non représenté.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Dispositif de commande par câble (1) comprenant :
- au moins une gaine de protection (2), et
- au moins une bride de fixation (11) de la gaine de protection (2) sur un support,
la gaine de protection (2) comprenant au moins une aile latérale de fixation (15) s'étendant radialement à l'extérieur de la gaine de protection (2), la bride de fixation (11) comprenant une mâchoire (20) comprenant un premier mors (21) et un deuxième mors (22), aptes à pincer l'aile latérale de fixation (15) dans une position de fermeture de la mâchoire (20), le premier mors (21) comprenant au moins une surface de pincement (30) apte à coopérer avec au moins une surface de pincement (30) du deuxième mors (22), **caractérisé en ce que** la bride de fixation (11) comprend des moyens de verrouillage (25) permettant d'assembler le premier mors (21) et le deuxième mors (22), les moyens de verrouillage (25) étant formés par un épaulement (27) et un crochet (26) destiné à venir s'engager avec l'épaulement (27).

2. Dispositif de commande par câble (1) selon la revendication 1, **caractérisé en ce que** l'aile latérale de fixation (15) est plastiquement déformable.

3. Dispositif de commande par câble (1) selon l'une des revendications 1 ou 2, **caractérisé en ce que** la surface de pincement (30) du premier mors (21) et/ou la surface de pincement (30) du deuxième mors (22) comprend au moins un plot de blocage (40).

4. Dispositif de commande par câble (1) selon l'une des revendications 1 à 3, **caractérisé en ce que** la surface de pincement (30) du premier mors (21) et/ou la surface de pincement (30) du deuxième mors (22) comprend au moins une cavité de blocage (41).

5. Dispositif de commande par câble (1) selon la revendication 3 et 4, **caractérisé en ce que**, en position de fermeture de la mâchoire (20), le plot de blocage (40) de la surface de pincement (30) du premier mors (21), respectivement du deuxième mors (22), coopère avec la cavité de blocage (41) de la surface de pincement (30) du deuxième mors (22), respectivement du premier mors (21).

6. Dispositif de commande par câble (1) selon l'une quelconque des revendications précédentes, **caractérisé en ce que** le premier mors (21) et le deuxième mors (22) sont liés par une articulation (23).

7. Dispositif de commande par câble (1) selon l'une quelconque des revendications précédentes, **caractérisé en ce que** la bride de fixation (11) comprend des moyens de verrouillage (25).

8. Dispositif de commande par câble (1) selon l'une quelconque des revendications précédentes, **caractérisé en ce que** le premier mors (21), respectivement le deuxième mors (22), comprend au moins une empreinte de réception (31).

9. Dispositif de commande par câble (1) selon l'une quelconque des revendications précédentes, **caractérisé en ce qu'**il comprend deux gaines de protection (2) liées entre elles au niveau d'une au moins une de leur extrémités par l'aile latérale de fixation (15) s'étendant radialement entre les deux gaines de protection (2).

10. Dispositif de commande par câble (1) selon l'une quelconque des revendications 1 à 9, **caractérisé en ce que** qu'il comprend deux gaines de protection (2) comportant respectivement une aile latérale de fixation (15).

11. Dispositif de commande par câble (1) selon l'une quelconque des revendications précédentes, **caractérisé en ce que** la gaine de protection (2) comprend deux ailes latérales de fixation (15) respectivement agencées à chacune des extrémités de la gaine de protection (2).

12. Dispositif de commande par câble (1) selon l'une quelconque des revendications précédentes, **caractérisé en ce qu'**il comprend deux brides de fixation (11) respectivement agencées à chacune des extrémités de la gaine de protection (2).

## Patentansprüche

1. Seilsteuerungsvorrichtung (1), die enthält:
- mindestens eine Schutzhülle (2), und
- mindestens einen Befestigungsflansch (11) der Schutzhülle (2) an einem Träger,
wobei die Schutzhülle (2) mindestens einen seitlichen Befestigungsflügel (15) enthält, der sich radial außerhalb der Schutzhülle (2) erstreckt, wobei der Befestigungsflansch (11) eine Klemmbacke (20) enthält, die einen ersten Backenteil (21) und einen zweiten Backenteil (22) enthält, die den seitlichen Befestigungsflügel (15) in einer Schließstellung der Klemmbacke (20) einklemmen können, und dass der erste Backenteil (21) mindestens eine Klemmfläche (30) enthält, die mit mindestens einer Klemmfläche (30) des zweiten Backenteils (22) zusammenwirken kann, **dadurch gekennzeichnet, dass** der Befestigungsflansch (11) Verriegelungseinrichtungen (25) enthält, die es ermöglichen, den ersten Backenteil (21) und den zweiten Backenteil (22) zusammenzubauen, wobei die Verriegelungseinrichtungen (25) von einer Schulter (27) und einem Haken (26) gebildet werden, der dazu bestimmt ist, mit der Schulter (27) in Eingriff zu kommen.

2. Seilsteuerungsvorrichtung (1) nach Anspruch 1, **dadurch gekennzeichnet, dass** der seitliche Befestigungsflügel (15) plastisch verformbar ist.

3. Seilsteuerungsvorrichtung (1) nach einem der Ansprüche 1 oder 2, **dadurch gekennzeichnet, dass** die Klemmfläche (30) des ersten Backenteils (21) und/oder die Klemmfläche (30) des zweiten Backenteils (22) mindestens ein Blockierklötzchen (40) enthält.

4. Seilsteuerungsvorrichtung (1) nach einem der Ansprüche 1 bis 3, **dadurch gekennzeichnet, dass** die Klemmfläche (30) des ersten Backenteils (21) und/oder die Klemmfläche (30) des zweiten Backenteils (22) mindestens einen Blockierhohlraum (41) enthält.

5. Seilsteuerungsvorrichtung (1) nach Anspruch 3 und 4, **dadurch gekennzeichnet, dass** in der Schließstellung der Klemmbacke (20) das Blockierklötzchen (40) der Klemmfläche (30) des ersten Backenteils (21) bzw. des zweiten Backenteils (22) mit dem Blockierhohlraum (41) der Klemmfläche (30) des zweiten Backenteils (22) bzw. des ersten Backenteils (21) zusammenwirkt.

6. Seilsteuerungsvorrichtung (1) nach einem der vorhergehenden Ansprüche, **dadurch gekennzeichnet, dass** der erste Backenteil (21) und der zweite Backenteil (22) über ein Gelenk (23) verbunden sind.

7. Seilsteuerungsvorrichtung (1) nach einem der vorhergehenden Ansprüche, **dadurch gekennzeichnet, dass** der Befestigungsflansch (11) Verriegelungseinrichtungen (25) enthält.

8. Seilsteuerungsvorrichtung (1) nach einem der vorhergehenden Ansprüche, **dadurch gekennzeichnet, dass** der erste Backenteil (21) bzw. der zweite Backenteil (22) mindestens eine Aufnahmeeinbuchtung (31) enthält.

9. Seilsteuerungsvorrichtung (1) nach einem der vorhergehenden Ansprüche, **dadurch gekennzeichnet, dass** sie zwei Schutzhüllen (2) enthält, die im Bereich mindestens eines ihrer Enden durch den seitlichen Befestigungsflügel (15) miteinander verbunden sind, der sich radial zwischen den zwei Schutzhüllen (2) erstreckt.

10. Seilsteuerungsvorrichtung (1) nach einem der Ansprüche 1 bis 9, **dadurch gekennzeichnet, dass** sie zwei Schutzhüllen (2) enthält, die je einen seitlichen Befestigungsflügel (15) aufweisen.

11. Seilsteuerungsvorrichtung (1) nach einem der vorhergehenden Ansprüche, **dadurch gekennzeichnet, dass** die Schutzhülle (2) zwei seitliche Befestigungsflügel (15) enthält, die je an den Enden der Schutzhülle (2) angeordnet sind.

12. Seilsteuerungsvorrichtung (1) nach einem der vorhergehenden Ansprüche, **dadurch gekennzeichnet, dass** sie zwei Befestigungsflansche (11) enthält, die an jedem der Enden der Schutzhülle (2) angeordnet sind.

## Claims

1. cable control device (1) including:
- at least one protective sheath (2), and
- at least one plate (11) for fixing the protective sheath (2) to a support,
the protective sheath (2) including at least one lateral fixing flange (15) extending radially outside the protective sheath (2), the fixing plate (11) including a jaw assembly (20) comprising a first jaw (21) and a second jaw (22) adapted to pinch the lateral fixing flange (15) in a closed position of the jaw assembly (20), and in that the first jaw (21) includes at least one pinch surface (30) adapted to cooperate with at least one pinch surface (30) of the second jaw (22), **characterized in that** the fixing plate (11) includes locking means (25) for joining together the first jaw (21) and the second jaw (22), the locking means (25) being formed by a shoulder (27) and a hook (26) intended to interengage with the shoulder (27).

2. Cable control device (1) according to Claim 1, **characterized in that** the lateral fixing flange (15) is plastically deformable.

3. Cable control device (1) according to either one of Claims 1 and 2, **characterized in that** the pinch surface (30) of the first jaw (21) and/or the pinch surface (30) of the second jaw (22) include(s) at least one immobilizing stud (40).

4. Cable control device (1) according to one of Claims 1 to 3, **characterized in that** the pinch surface (30) of the first jaw (21) and/or the pinch surface (30) of the second jaw (22) includes at least one immobilizing cavity (41).

5. Cable control device (1) according to Claims 3 and 4, **characterized in that** in the closed position of the jaw assembly (20) the immobilizing stud (40) of the pinch surface (30) of the first jaw (21), respectively the second jaw (22), cooperates with the immobilizing cavity (41) of the pinch surface (30) of the second jaw (22), respectively the first jaw (21).

6. Cable control device (1) according to any one of the preceding claims, **characterized in that** the first jaw (21) and the second jaw (22) are connected by an articulation (23).

7. Cable control device (1) according to any one of the preceding claims, **characterized in that** the fixing plate (11) includes locking means (25).

8. Cable control device (1) according to any one of the preceding claims, **characterized in that** the first jaw (21), respectively the second jaw (22), includes at least one reception indentation (31).

9. Cable control device (1) according to any one of the preceding claims, **characterized in that** it includes two protective sheaths (2) connected to each other at one of their ends at least by the lateral fixing flange (15) extending radially between the two protective sheaths (2).

10. Cable control device (1) according to any one of Claims 1 to 9, **characterized in that** it includes two protective sheaths (2) including a respective lateral fixing flange (15).

11. Cable control device (1) according to any one of the preceding claims, **characterized in that** the protective sheath (2) includes two lateral fixing flanges (15) at respective ends of the protective sheath (2).

12. Cable control device (1) according to any one of the preceding claims, **characterized in that** it includes two fixing plates (11) at respective ends of the protective sheath (2).
